# EUROPEAN PATENT SPECIFICATION

(11) **EP 3 788 678 B1**
(45) Date of publication and mention of the grant of the patent: **17.01.2024**
(21) Application number: 18916447.8
(22) Date of filing: 28.04.2018
(51) Int. Cl.: H01R 4/70, H01R 9/26, H01R 13/66, G01K 3/04, G01K 11/12, G01K 1/06

(54) **TERMINAL BLOCK**
ANSCHLUSSLEISTE
BORNIER

(43) Date of publication of application: 10.03.2021
(73) Proprietor: TE Connectivity Solutions GmbH, 8200 Schaffhausen (CH)
(72) Inventor: SU, Cuicui, Beijing 100102 (CN); LI, Nan, Beijing 102218 (CN); CHEN, Jiansheng, Beijing 100024 (CN); VILLARD, Romain, 69800 Saint-Priest (FR); BARTHES, Karine, 69500 Bron (FR); DUMOUX, Jacques, 69740 Genas (FR); HAMOND, Christophe, 69510 Messmy (FR)
(74) Representative: Germain Maureau
(86) International application number: PCT/CN2018/085009
(87) International publication number: WO 2019/205115

(56) References cited:
- CN-A- 1 144 979
- CN-A- 105 758 022
- DE-A1- 2 914 192
- JP-A- 2011 023 309
- JP-A- 2016 099 057
- KR-B1- 101 698 569

## Description

### Technical Field

The invention relates to terminal blocks, and more particularly to the terminal blocks being able to indicate an overheat condition to an observer.

### Background Art

In a terminal block, electrical contacts are typically made between its conductive linking bar and at least two electrical conductors by screw fastening means. If the electrical contacts between these contact parts are unsatisfactory, for example, if insufficient contact pressure is provided between the parts, arcing may occur, which leads to overheating of the terminal block, which, if undetected, may prove dangerous, possibly leading to the terminal block catching fire.

Patent KR 1 698 569 B1 discloses a terminal block in which a thermal conductive path is established for conducting heat originated in a conductive linking bar, through a metallic contact terminal of color change unit, to an insulating cap formed on upper end of the contact terminal and then to a discoloration unit arranged on the insulating cap, and thus the discoloration unit will change color indicating overheat condition to an observer.

However, there are technical problems with the terminal block. Since the material of the insulating cap normally exhibits higher thermal resistivity than that of the metallic contact terminal, it will provide a thermal insulation between the metallic contact terminal and the discoloration unit. This may mean that in certain operating conditions the internal electrical contacts may seriously overheat before the external discoloration unit reaches a sufficiently high temperature to change color. Besides, the discoloration unit may be exposed to an unfriendly environment having high level of humidity, erosion of chemical substances, or high probability of mechanical damages, which causes deterioration of the discoloration unit.

### Brief Summary of the Invention

It is therefore an objective of the invention to provide a terminal block, including: an insulating body, having a duct and at least one hole formed through a wall of the insulating body, a conductive linking bar in the insulating body for connecting at least one wire respectively passing through the at least one hole, a temperature detector partially received by the duct and made of thermal conductive material exhibiting thermal resistivity lower than the insulating body having at least one first end, a second end, and a connecting portion mechanically linking the first end and the second end, and a discoloration layer in contact with the second end of the temperature detector having at least a thermochromic layer. The first end and at least a part of the connecting portion of the temperature detector is arranged to pass through the duct towards the conductive linking bar so that the discoloration layer on the second end of the temperature detector is farther to the conductive linking bar than the first end of the temperature detector.

By having such arrangement, it is helpful to allow the discoloration layer to be viewed by an external observer indicating overheating in the terminal block, thus make it more sensitive to the internal temperature of the terminal block.

Preferably, the terminal block further includes a cap made of insulating and transparent material and being configured to encapsulate the discoloration layer. For example, the cap is made of transparent material, such as thermoplastics (polycarbonate, polyamide, polymethylmethacrylate, ABS, et al), rubbers, glasses and ceramics, for an easy observation of the underlying color change. The color change of the discoloration layer will be visible by an observer through the transparent cap so as to raise his alert the fact that the terminal block is internally overheating. Furthermore, this cap can also protect the TC discoloration layer from mechanical damage (scratch, impact, et al) or ambient disturbance (moisture, extra heating source, pollution, et al). As an alternative, the discoloration layer can be applied on the transparent cap's inner face firstly, and then the assembly of the cap and the discoloration layer can be disposed to cover the second end of the temperature detector.

Preferably, the cap is shaped in a lens magnifying an image of the discoloration layer. Given that the second end of the temperature detector has a relatively small exposed surface outside of the insulating body, a magnification lens or other special light transmission design will be adopted for an easier observation of the colour change by human eyes from a long distance. Preferably, the discoloration layer is arranged outside of the duct, and the encapsulation of the discoloration layer by the cap is arranged external to the insulating body.

Preferably, the connecting portion of the temperature detector includes a first tooth and a second tooth respectively linking the first ends and the second end.

Preferably, the first tooth includes a first base portion and a first end portion extending from the first base portion at an obtuse angle, the second tooth has a second base portion and a second end portion extending from the second base portion, being configured to have a concave cross section with the concave side facing towards the first tooth, and the conductive linking bar includes an opening facing the duct, being configured for insertion of the first end portion of the first tooth and the second end portion of the second tooth in contact with its internal side. The the first tooth 20 and the second tooth 21 each have free ends situated at the ends of these teeth. These folded-over ends make inserting the teeth into the opening of the conductive linking bar easier.

Preferably, the first tooth includes a protrusion on a side of its first end portion opposite to the second tooth, being arranged to clamp a rim of the opening of the conductive linking bar where the first end portion of the first tooth and the second end portion of the second tooth are inserted into the opening of the conductive linking bar. This is helpful for securing the mounting position of the teeth of the detector with respective to the conductive linking bar further.

Preferably, the terminal block further includes an insulating casing having a first portion with an opening being arranged between the discoloration layer on the connecting portion of the temperature detector and an internal side of the cap, and a second portion extending from the first portion, being configured to partially cover the first tooth and the second tooth of the temperature detector. The second portion of the insulating casing has an external protrusion, being arranged to clamp a rim of the duct where the first end portion of the first tooth and the second end portion of the second tooth are inserted into the opening of the conductive linking bar. By having the insulating casing, a relative movement between the temperature detector and the duct towards the latter can be prevented, thus improving the fixation of the detector; besides, the first base portion of the first tooth and the second base portion of the second tooth can be engaged with each other.

Preferably, a material of the thermochromic layer is selected from thermochromic paint, ink, tape, film, label or a combination thereof.

Preferably, the insulating and transparent material of the cap is selected from transparent thermoplastics (polycarbonate, polyamide, polymethylmethacrylate, ABS, et al), rubbers, glasses and ceramics.

Preferably, the discoloration layer further includes a background layer beneath the thermochromic layer.

### Brief Description of the Drawings

The subject matter of the invention will be explained in more detail in the following text with reference to preferred exemplary embodiments which are illustrated in the drawings, in which:
Figures 1A and 1B respectively illustrate a perspective view and a sectional view along plane A-A of a terminal block according to an embodiment of present invention;
Figures 2A respectively illustrate an explosion view and a sectional view of an embodiment of the temperature detector; and
Figure 2B illustrates a sectional view along plane A-A of its assembly with the duct of the insulating body.

The reference symbols used in the drawings, and their meanings, are listed in summary form in the list of reference symbols. In principle, identical parts are provided with the same reference symbols in the figures.

### Preferred Embodiments of the Invention

While the invention is susceptible to various modifications and alternative forms, specific embodiments thereof are shown by way of example in the drawings and will herein be described in detail. It should be understood, however, that the drawings and detailed description thereto are not intended to limit the invention to the particular form disclosed, but on the contrary, the intention is to cover all modifications, equivalents, and alternatives falling within the scope of the present invention as defined by the appended claims. Note, the headings are for organizational purposes only and are not meant to be used to limit or interpret the description or claims. Furthermore, note that the word "may" is used throughout this application in a permissive sense (i.e., having the potential to, being able to), not a mandatory sense (i.e., must)." The term "include", and derivations thereof, mean "including, but not limited to". The term "connected" means "directly or indirectly connected", and the term "coupled" means "directly or indirectly connected".

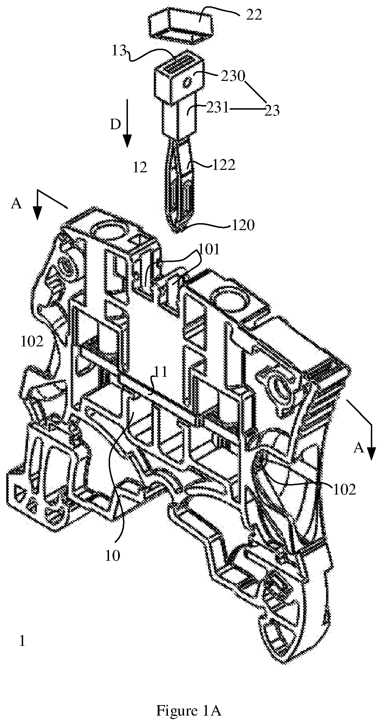

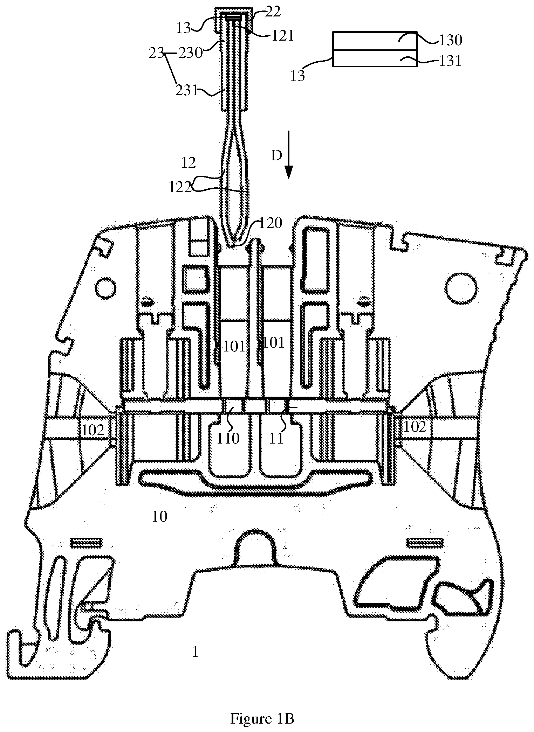

Figures 1A and 1B respectively illustrate a perspective view and a sectional view along plane A-A of a terminal block according to an embodiment of present invention. As shown in figures 1A and 1B, the terminal block 1 includes an insulating body 10, a conductive linking bar 11, a temperature detector 12, and a discoloration layer 13 arranged on the temperature detector 12. The discoloration layer 13 includes at least a thermochroic layer.

In the embodiment, the insulating body 10 is made of an insulating material and designed to be shaped like a case defining internal space by its wall. For example, the insulating body 10 is made of Polyamide (PA) material, which has a maximum withstand temperature close to 110 0C. When the temperature rises to 110 0C, especially to 130 0C, burning of terminal block will happen and thus complete product failure. So, the temperature range 110-130 0C is defined as one threshold temperature (color change transition temperature) range. For other types of terminal blocks, the threshold temperature can be determined using the same method. The wall of the insulating body 10 is suitable for separating the terminal block 1 from another identical or compatible electrical device when the two insulating bodies are mounted side-by-side. The insulating body 10 has at least one duct 101 formed though the wall of the insulating body 10. In this embodiment, there are two ducts 101, and the language hereafter exemplifies the embodiment by using one of the ducts to the left. The duct 101 is arranged to open out to the outsides of the insulating body 10 with crosssection in rectangular. The duct 101 can receive an accessory, for example a jumper for mechanical and electrical interconnection with an adjoining other terminal block. The same duct 101 can be reused for receive the temperature detector 12 for temperature monitoring of the terminal block 1, which will be described in detail thereafter.

In the embodiment, the insulating body 10 further includes two holes 102 formed through the wall of the insulating body 10, which can be used for respectively passing the wires to be connected to the conductive linking bar 11. The skilled person shall understand that the number of the holes 102 can be one or more, which depends on the observer's requirement of how many wires to be connected. For example, the duct 101 is arranged to be substantially perpendicular to either of the holes 102.

In the embodiment, the shape of the conductive linking bar 11 is symmetrical about a transverse mid-plane which corresponds to that of the insulating body 10, when the terminal block 1 has the conductive linking bar 11 positioned in the insulating body 10. The conductive linking bar 11 is shaped like a plane being symmetrical about the above-defined transverse mid-plane and being designed to be placed parallel to the wall with the duct 101 formed through. Inside of the insulating body 10, it provides support elements for fixing the conductive linking bar 11 so that its two ends respectively abut the internal rims of the two holes 102 and at least a portion of it abuts the internal rim of the duct 101. Thus, the wires can reach the ends of the conductive linking bar 11 passing through the two holes 102, which in turn, can be fastened to the latter by fastening means; besides, an appropriatelyshaped temperature detector is allowed to pass through the duct 101 to be in physical contact with the conductive linking bar 11.

In the embodiment, the temperature detector 12 is configured to be at least partially received by the duct 10] of the insulating body 10 and be made of thermal conductive material exhibiting thermal resistivity lower than the insulating body 10. The temperature detector 12 has at least one first end 120, a second end 121 and a connecting portion 122 mechanically liking the first end 120 and the second end 121. For example, the longitudinal length from the first end 120 to the second end 121 of the temperature detector 12 is equal to or greater than the depth of the duct 10], and the thermal conductive material can be metal, such as copper or aluminum. In a state of assembly, the first end 120 and at least a part of the connecting portion 122 of the temperature detector 12 is arranged to pass through the duct towards the conductive linking bar 11 in a direction D so that the discoloration layer 13 on the second end 121 of the temperature detector 12 is farther to the conductive linking bar 11 than the first end 120 of the temperature detector 12.

Thus, the discoloration layer is arranged at one end of the temperature detector exposed to the observer, and the thermal resistance between the discoloration layer and the conductive linking bar is kept as low as possible. By having such arrangement, it is helpful to allow the discoloration layer to be viewed by an external observer indicating overheating in the terminal block, thus make it more sensitive to the internal temperature of the terminal block

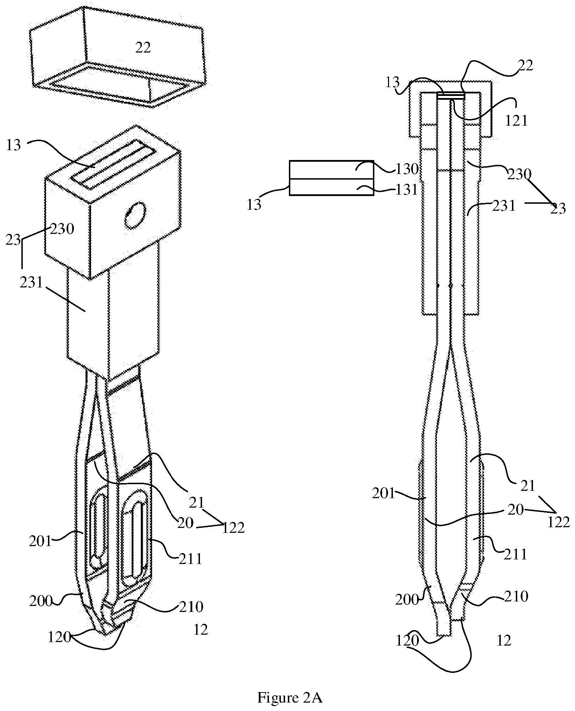

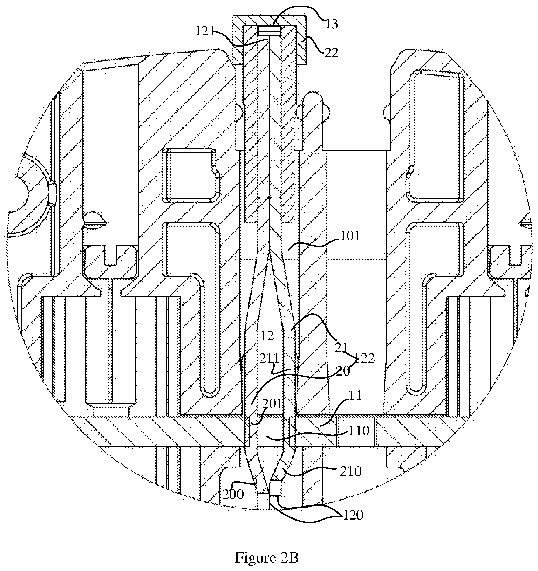

Figures 2A respectively illustrate an explosion view and a sectional view of an embodiment of the temperature detector; and Figure 2B illustrates a sectional view along plane A-A of its assembly with the duct of the insulating body.

As shown figures 2A and 2B, the temperature detector 12 is shaped like a fork having two first ends 120 and one second end 121. The connecting portion of the temperature detector 12 includes a first tooth 20 and a second tooth 21 respectively linking the two first ends 120 each and the second end 121. The first tooth 20 includes a first base portion 200 and a first end portion 201 extending from the first base portion 200 at an obtuse angle. The second tooth 21 has a second base portion 210 and a second end portion 211 extending from the second base portion 210, being configured to have a concave cross section with the concave side facing towards the first tooth 20. The conductive linking bar 11 includes an opening 110 facing the duct 101, being configured for insertion of the first end portion 201of the first tooth 20 and the second end portion 211 of the second tooth 21 in contact with its internal side. The the first tooth 20 and the second tooth 21 each have free ends situated at the ends of these teeth. These folded-over ends make inserting the teeth into the opening of the conductive linking bar easier.

In this embodiment, the first tooth 20 includes a protrusion on a side of its first end portion 200 opposite to the second tooth 21, being arranged to clamp a rim of the opening 110 of the conductive linking bar 11 where the first end portion 201 of the first tooth 20 and the second end portion 211 of the second tooth 21 are inserted into the opening 110 of the conductive linking bar 11. This is helpful for securing the mounting position of the teeth of the detector with respective to the conductive linking bar 11 further.

In the embodiment, the discoloration layer 13 is arranged in contact with the second end 121 of the temperature detector 12. For example, its thermochromic layer 130 can be sprayed/printed on the the second end 121 of the temperature detector 12, or alternatively detachably contact with the second end 121 with the assistance of another part, such as a cap described thereafter. In order to accomplish the above objects, irreversible thermochromic materials, which change color at a defined temperature and remain unchanged when the temperature drops, are chosen to check the temperature history. In other embodiments, semi-reversible thermochromic materials, which change color at a defined temperature T1 and recover the original color when the temperature drops to T2 or when they meet water, may be also employed. As mentioned above, the designed threshold temperature for the example screw type terminal block is 110 or 130°C. Of course, the threshold temperature could be set at other values depending on the specific applications or the customer's needs.

The thermochromic layer 130 may be selected from thermochromic paint, ink, tape, film, label or a combination thereof. Preferably, TC coating composition may be applied to the substrate by any of a variety methods, for example, flow coating, dipping and spraying. The coating thickness may be in a range of tens to hundreds micrometers and can be set optionally according to selection of the coating method. Preferably, the thermochromic elements may be of any type, for example, pigments, dyes, semi-conductors and liquid crystal systems. The thermochromic materials are largely chosen because of their responses to different temperatures (threshold). These TC materials have a relatively wide threshold range and will differ in the time required to change color in response to a change in temperature.

Preferably, the discoloration layer 13 further includes a background layer 131 showing background colors or graphics can be applied beneath the the thermochromic layer 130 of the discoloration layer 13 to provide a consistent basis for calibrating the color change. A base color or pattern is visible when the TC material changes to a clear, colorless or at least partially translucent state.

In the embodiment, the terminal block 1 further includes a cap 22 made of insulating and transparent material and in a shape to cover the discoloration layer 13. In an assembly state the cap 20 is arranged to encapsulate the discoloration layer 13. For example, the cap is made of transparent material, such as thermoplastics (polycarbonate, polyamide, polymethylmethacrylate, ABS, et al), rubbers, glasses and ceramics, for an easy observation of the underlying color change. The color change of the discoloration layer will be visible by an observer through the transparent cap so as to raise his alert the fact that the terminal block is internally overheating. Furthermore, this cap 22 can also protect the discoloration layer from mechanical damage (scratch, impact, et al) or ambient disturbance (moisture, extra heating source, pollution, et al). As an alternative, the discoloration layer 13 can be applied on the transparent cap's inner face firstly, and then the assembly of the cap 22 and the discoloration layer 13 can be disposed to cover the second end 121 of the temperature detector.

In the embodiment, the cap 22 is shaped in a lens magnifying an image of the discoloration layer 31. Given that the second end 121 of the temperature detector 12 has a relatively small exposed surface outside of the insulating body 10, a magnification lens or other special light transmission design will be adopted for an easier observation of the color change by human eyes from a long distance.

In the embodiment, the discoloration layer 13 is arranged outside of the duct 101, and the encapsulation of the discoloration layer 13 by the cap 22 is arranged external to the insulating body 10. This increases the exposure of the discoloration layer to the observer, thus manifesting the color change due to overheating occurring in the terminal block.

In the embodiment, the terminal block further includes an insulating casing 23. The insulating case 23 for example may be shaped in a sheath injection molded around the temperature detector 12. For example, the insulating casing 23 may be made of Polyamide (PA). It has a first portion 230 with an opening exposing the discoloration layer 13, and a second portion 23] extending from the first portion 230, being configured to partially fits firmly the first tooth 20 and the second tooth 21 of the temperature detector 12. Such opening of the first portion 230 allows the exposure of the discoloration layer 13 to the cap 22 encapsulating part of the insulating case 23 and the discoloration layer 13.The first portion 230 of the insulating casing 23 has an external protrusion, being arranged to clamp a rim of the duct 101 where the first end portion 201 of the first tooth 20 and the second end portion 211 of the second tooth 21 are inserted into the opening 110 of the conductive linking bar 11. By having the insulating casing, a relative movement between the temperature detector 12 and the duct 101 towards the latter can be prevented, thus improving the fixation of the detector; besides, the first base portion 200 of the first tooth 20 and the second base portion 210 of the second tooth 21 can be engaged with each other.

Though the present invention has been described on the basis of some preferred embodiments, those skilled in the art should appreciate that those embodiments should by no way limit the scope of the present invention. Without departing from the scope of the present invention, any variations and modifications to the embodiments should be within the apprehension of those with ordinary knowledge and skills in the art, and therefore fall in the scope of the present invention which is defined by the accompanied claims.

## Claims

1. A terminal block, including an insulating body (10), having at least one duct (101) and at least one hole (102) formed through a wall of the insulating body (10); a conductive linking bar (11) arranged in the insulating body (10), being adapted for connecting at least one wire respectively passing through the at least one hole (102); a temperature detector (12) being configured to be at least partially received by the duct (101) and having at least one first end, a second end, and a connecting portion mechanically linking the first end and the second end; and a discoloration layer (13) arranged in contact with the second end of the temperature detector (12), including at least a thermochromic layer (130); wherein: the first end and at least a part of the connecting portion of the temperature detector (12) is arranged to pass through the duct (101) towards the conductive linking bar (11) so that the discoloration layer (13) on the second end of the temperature detector (12) is farther to the conductive linking bar (11) than the first end of the temperature detector (12), **characterized in that** the temperature detector (12) is made of thermal conductive material exhibiting thermal resistivity lower than the insulating body (10).

2. The terminal block according to claim 1, further including:
a cap (22), being made of insulating and transparent material and being configured to cover the discoloration layer (13);
wherein:
the cap (22) is arranged to encapsulate the discoloration layer (13).

3. The terminal block according to claim 2, wherein:
the cap (22) is shaped in a lens magnifying an image of the discoloration layer (13).

4. The terminal block according to claim 2 or 3, wherein:
the discoloration layer (13) is arranged outside of the duct (101); and
the encapsulation of the discoloration layer (13) by the cap (22) is arranged external to the insulating body (10).

5. The terminal block according to any of the preceding claims, wherein:
the connecting portion of the temperature detector (12) includes:
a first tooth and a second tooth respectively linking the first ends and the second end.

6. The terminal block according to claim 5, wherein:
the first tooth includes a first base portion and a first end portion extending from the first base portion at an obtuse angle;
the second tooth has a second base portion and a second end portion extending from the second base portion, being configured to have a concave cross section with the concave side facing towards the first tooth; and
the conductive linking bar (11) includes an opening (110) facing the duct (101), being configured for insertion of the first end portion of the first tooth and the second end portion of the second tooth in contact with its internal side.

7. The terminal block according to claim 6, wherein:
the first tooth includes a protrusion on a side of its first end portion opposite to the second tooth, being arranged to clamp a rim of the opening (110) of the conductive linking bar (11) where the first end portion of the first tooth and the second end portion of the second tooth are inserted into the opening (110) of the conductive linking bar (11).

8. The terminal block according to claim 7, further including:
an insulating casing (23), having:
a first portion with an opening being arranged between the discoloration layer (13) on the connecting portion of the temperature detector (12) and an internal side of the cap (22); and
a second portion extending from the first portion, being configured to partially cover the first tooth and the second tooth of the temperature detector (12);
wherein:
the second portion of the insulating casing (23) has an external protrusion, being arranged to clamp a rim of the duct (101) where the first end portion of the first tooth and the second end portion of the second tooth are inserted into the opening of the conductive linking bar (11).

9. The terminal block according to any of the preceding claims, wherein:
the duct (10]) is arranged to be substantially perpendicular to either of the one hole (102).

10. The terminal block according to any of the preceding claims, wherein:
material of the thermochromic layer (130) is selected from thermochromic paint, ink, tape, film, label or a combination thereof.

11. The terminal block according to claim 2, 3 or 4, wherein:
the insulating and transparent material of the cap (22) is selected from transparent thermoplastics (polycarbonate, polyamide, polymethylmethacrylate, ABS, et al), rubbers, glasses and ceramics.

12. The terminal block according to any of the preceding claims, wherein:
the discoloration layer (13) further includes a background layer (131) beneath the thermochromic layer (130).

## Patentansprüche

1. Anschlussleiste, die einen Isolierkörper (10) beinhaltet, der mindestens einen Kanal (101) und mindestens ein Loch (102) aufweist, das durch eine Wand des Isolierkörpers (10) hindurch gebildet ist; einen leitfähigen Verbindungssteg (11), der in dem Isolierkörper (10) angeordnet ist, der ausgeführt ist, um mindestens einen Draht, der jeweils durch das mindestens eine Loch (102) verläuft anzuschließen; einen Temperaturfühler (12), der konfiguriert ist, um mindestens teilweise von dem Kanal (101) aufgenommen zu werden, und mindestens ein erstes Ende, ein zweites Ende und einen Anschlussabschnitt aufweist, der das erste Ende und das zweite Ende mechanisch verbindet; und eine Verfärbungsschicht (13), die in Kontakt mit dem zweiten Ende des Temperaturfühlers (12) angeordnet ist, die mindestens eine Thermochromschicht (130) beinhaltet; wobei: das erste Ende und mindestens ein Teil des Anschlussabschnitts des Temperaturfühlers (12) angeordnet sind, um durch den Kanal (101) hindurch zum leitfähigen Verbindungssteg (11) zu verlaufen, sodass die Verfärbungsschicht (13) am zweiten Ende des Temperaturfühlers (12) weiter vom leitfähigen Verbindungssteg (11) entfernt ist als das erste Ende des Temperaturfühlers (12), **dadurch gekennzeichnet, dass** der Temperaturfühler (12) aus einem wärmeleitenden Material gefertigt ist, das einen niedrigeren thermischen Widerstand besitzt, als der Isolierkörper (10).

2. Anschlussleiste nach Anspruch 1, die weiter beinhaltet:
eine Kappe (22), die aus isolierendem und transparentem Material gefertigt ist, und konfiguriert ist, um die Verfärbungsschicht (13) abzudecken;
wobei:
die Kappe (22) angeordnet ist, um die Verfärbungsschicht (13) einzukapseln.

3. Anschlussleiste nach Anspruch 2, wobei:
die Kappe (22) zu einer Linse geformt ist, die ein Bild der Verfärbungsschicht (13) vergrößert.

4. Anschlussleiste nach Anspruch 2 oder 3, wobei:
die Verfärbungsschicht (13) außerhalb des Kanals (101) angeordnet ist; und
die Einkapselung der Verfärbungsschicht (13) durch die Kappe (22) außerhalb des Isolierkörpers (10) angeordnet ist.

5. Anschlussleiste nach einem der vorstehenden Ansprüche, wobei:
der Anschlussabschnitt des Temperaturfühlers (12) beinhaltet:
einen ersten Zahn und einen zweiten Zahn, die jeweils die ersten Enden und das zweite Ende verbinden.

6. Anschlussleiste nach Anspruch 5, wobei:
der erste Zahn einen ersten Grundabschnitt und einen ersten Endabschnitt beinhaltet, der sich in einem stumpfen Winkel aus dem ersten Grundabschnitt erstreckt;
der zweite Zahn einen zweiten Grundabschnitt und einen zweiten Endabschnitt aufweist, der sich aus dem zweiten Grundabschnitt erstreckt, der konfiguriert ist, um einen konkaven Querschnitt mit der konkaven Seite aufzuweisen, die zum ersten Zahn zeigt; und
der leitfähige Verbindungssteg (11) eine Öffnung (110) beinhaltet, die zum Kanal (101) zeigt, die zum Einführen des ersten Endabschnitts des ersten Zahns und des zweiten Endabschnitts des zweiten Zahns in Kontakt mit deren Innenseite konfiguriert ist.

7. Anschlussleiste nach Anspruch 6, wobei:
der erste Zahn einen Vorsprung auf einer Seite seines ersten Endabschnitts gegenüber dem zweiten Zahn beinhaltet, der angeordnet ist, um einen Rand der Öffnung (110) des leitfähigen Verbindungsstegs (11) zu klemmen, wobei der erste Endabschnitt des ersten Zahns und der zweite Endabschnitt des zweiten Zahns in die Öffnung (110) des leitfähigen Verbindungsstegs (11) eingeführt werden.

8. Anschlussleiste nach Anspruch 7, die weiter beinhaltet:
ein Isoliergehäuse (23), das aufweist:
einen ersten Abschnitt mit einer Öffnung, die zwischen der Verfärbungsschicht (13) am Anschlussabschnitt des Temperaturfühlers (12) und einer Innenseite der Kappe (22) angeordnet ist;
und
einen zweiten Abschnitt, der sich aus dem ersten Abschnitt erstreckt, der konfiguriert ist, um den ersten Zahn und den zweiten Zahn des Temperaturfühlers (12) teilweise abzudecken;
wobei:
der zweite Abschnitt des Isoliergehäuses (23) einen äußeren Vorsprung aufweist, der angeordnet ist, um einen Rand des Kanals (101) zu klemmen, wobei der erste Endabschnitt des ersten Zahns und der zweite Endabschnitt des zweiten Zahns in die Öffnung des leitfähigen Verbindungsstegs (11) eingeführt werden.

9. Anschlussleiste nach einem der vorstehenden Ansprüche, wobei:
der Kanal (101) angeordnet ist, um im Wesentlichen senkrecht zu jedem von dem einen Loche (102) zu sein.

10. Anschlussleiste nach einem der vorstehenden Ansprüche, wobei:
Material der Thermochromschicht (130) aus Thermochrom-Lack, -Tinte, - Klebeband, -Folie, -Etikett oder einer Kombination davon ausgewählt ist.

11. Anschlussleiste nach Anspruch 2, 3 oder 4, wobei:
das isolierende und transparente Material der Kappe (22) aus transparentem Thermoplast (Polykarbonat, Polyamid, Polymethylmethacrylat, ABS und anderen), Gummis, Gläsern und Keramik ausgewählt ist.

12. Anschlussleiste nach einem der vorstehenden Ansprüche, wobei:
die Verfärbungsschicht (13) weiter eine Hintergrundschicht (131) unterhalb der Thermochromschicht (130) beinhaltet.

## Revendications

1. Bornier, comprenant un corps isolant (10), ayant au moins un conduit (101) et au moins un trou (102) formé à travers une paroi du corps isolant (10) ; une barre de liaison conductrice (11) agencée dans le corps isolant (10), qui est adaptée pour connecter au moins un fil passant respectivement à travers l'au moins un trou (102) ; un détecteur de température (12) qui est configuré pour être au moins partiellement reçu par le conduit (101) et ayant au moins une première extrémité, une seconde extrémité et une partie de connexion reliant mécaniquement la première extrémité et la seconde extrémité ; et une couche de décoloration (13) agencée en contact avec la seconde extrémité du détecteur de température (12), comprenant au moins une couche thermochromique (130) ; dans lequel : la première extrémité et au moins une partie de la partie de connexion du détecteur de température (12) sont agencées pour traverser le conduit (101) vers la barre de liaison conductrice (11) de sorte que la couche de décoloration (13) sur la seconde extrémité du détecteur de température (12) soit plus éloignée de la barre de liaison conductrice (11) que la première extrémité du détecteur de température (12), **caractérisé en ce que** le détecteur de température (12) est réalisé en un matériau thermoconducteur présentant une résistivité thermique inférieure à celle du corps isolant (10).

2. Bornier selon la revendication 1, comprenant en outre :
un capuchon (22), qui est réalisé en un matériau isolant et transparent et qui est configuré pour couvrir la couche de décoloration (13) ;
dans lequel :
le capuchon (22) est agencé pour encapsuler la couche de décoloration (13).

3. Bornier selon la revendication 2, dans lequel :
le capuchon (22) a la forme d'une lentille grossissant une image de la couche de décoloration (13).

4. Bornier selon la revendication 2 ou 3, dans lequel :
la couche de décoloration (13) est agencée à l'extérieur du conduit (101) ; et
l'encapsulation de la couche de décoloration (13) par le capuchon (22) est agencée à l'extérieur du corps isolant (10).

5. Bornier selon l'une des revendications précédentes, dans lequel :
la partie de connexion du détecteur de température (12) comprend :
une première dent et une seconde dent reliant respectivement les premières extrémités et la seconde extrémité.

6. Bornier selon la revendication 5, dans lequel :
la première dent comprend une première partie de base et une première partie d'extrémité s'étendant à partir de la première partie de base selon un angle obtus ;
la seconde dent a une seconde partie de base et une seconde partie d'extrémité s'étendant à partir de la seconde partie de base, qui est configurée pour avoir une section transversale concave avec le côté concave orienté vers la première dent ; et
la barre de liaison conductrice (11) comprend une ouverture (110) orientée vers le conduit (101), qui est configurée pour l'insertion de la première partie d'extrémité de la première dent et de la seconde partie d'extrémité de la seconde dent en contact avec son côté interne.

7. Bornier selon la revendication 6, dans lequel :
la première dent comprend une saillie sur un côté de sa première partie d'extrémité opposé à la seconde dent, qui est agencée pour serrer un bord de l'ouverture (110) de la barre de liaison conductrice (11) où la première partie d'extrémité de la première dent et la seconde partie d'extrémité de la seconde dent sont insérées dans l'ouverture (110) de la barre de liaison conductrice (11).

8. Bornier selon la revendication 7, comprenant en outre :
un boîtier isolant (23), ayant :
une première partie avec une ouverture qui est agencée entre la couche de décoloration (13) sur la partie de connexion du détecteur de température (12) et un côté interne du capuchon (22) ; et
une seconde partie s'étendant à partir de la première partie, qui est configurée pour couvrir partiellement la première dent et la seconde dent du détecteur de température (12) ;
dans lequel :
la seconde partie du boîtier isolant (23) a une saillie externe, qui est agencée pour serrer un bord du conduit (101) où la première partie d'extrémité de la première dent et la seconde partie d'extrémité de la seconde dent sont insérées dans l'ouverture de la barre de liaison conductrice (11).

9. Bornier selon l'une des revendications précédentes, dans lequel :
le conduit (101) est agencé pour être sensiblement perpendiculaire à l'un ou l'autre des trous (102).

10. Bornier selon l'une des revendications précédentes, dans lequel :
le matériau de la couche thermochromique (130) est choisi parmi une peinture thermochromique, une encre, un ruban, un film, une étiquette ou une combinaison de ceux-ci.

11. Bornier selon la revendication 2, 3 ou 4, dans lequel :
le matériau isolant et transparent du capuchon (22) est choisi parmi les thermoplastiques transparents (polycarbonate, polyamide, polyméthacrylate de méthyle, ABS, et autres), les caoutchoucs, les verres et les céramiques.

12. Bornier selon l'une des revendications précédentes, dans lequel :
la couche de décoloration (13) comprend en outre une couche d'arrièreplan (131) sous la couche thermochromique (130).
